# EUROPÄISCHE PATENTSCHRIFT

(11) **EP 2 574 403 B1**
(45) Veröffentlichungstag und Bekanntmachung des Hinweises auf die Patenterteilung: **21.10.2015**
(21) Anmeldenummer: 12186679.2
(22) Anmeldetag: 28.09.2012
(51) Int. Cl.: B01L 9/06, G01N 35/00

(54) **Greifvorrichtung für Probenbehälter**
Gripping device for sample containers
Dispositif de préhension pour porte-échantillon

(30) Priorität: 29.09.2011 DE 102011083794
(43) Veröffentlichungstag der Anmeldung: 03.04.2013
(73) Patentinhaber: Hamilton Bonaduz AG, 7402 Bonaduz (CH)
(72) Erfinder: Gallmann, Flurin, 7000 Chur (CH); Panzer, Armin, 7014 Trin (CH)
(74) Vertreter: RLTG

(56) Entgegenhaltungen:
- WO-A1-2010/000955
- WO-A2-2007/087183
- DD-A1- 205 113
- DE-A1- 10 017 802
- GB-A- 2 085 400
- US-A- 270 567
- US-A1- 2006 032 192
- US-B1- 6 398 281

## Beschreibung

Die vorliegende Erfindung betrifft eine im Oberbegriff des Anspruchs 1 definierte Greifvorrichtung für Probenbehälter, insbesondere für forensische Probenbehälter mit einem Innenbehälterabschnitt, welcher relativ zu einem den Innenbehälterabschnitt umgebenden Außenbehälterabschnitt längs einer Probenbehälterachse verlagerbar ist, wobei die Greifvorrichtung sich längs einer Greifvorrichtungs-Längsachse erstreckt und unter anderem umfasst: eine Greifeingriffseinrichtung mit wenigstens zwei Greifbacken, von welchen wenigstens eine, vorzugsweise mehrere, besonders bevorzugt alle, in radialer Richtung bezüglich der Greifvorrichtungs-Längsachse zwischen einer Eingriffsstellung, in welcher ein etwaig an den Greifbacken anliegender Probenbehälter von der Greifeingriffseinrichtung gegriffen ist, und einer Freigabestellung, in welcher der Probenbehälter von der Greifeingriffseinrichtung nicht gegriffen ist, verstellbar ist, und eine Betätigungseinrichtung zur Verstellung der wenigstens einen Greifbacke wenigstens in ihre Eingriffsstellung.

Eine Greifvorrichtung mit den Merkmalen des Oberbegriffs des Anspruchs 1 ist aus der Druckschrift US 6 398 281 B1 bekannt. Ähnliche Greifvorrichtungen sind aus den Druckschriften DE 100 17 802 A1 und WO 2010/000955 A1 bekannt.

Falls zwischen den Greifbacken kein Probenbehälter angeordnet ist, unterscheiden sich Eingriffsstellung und Freigabestellung mit anderen Worten durch den radialen Abstand der Greifbacken voneinander bzw. von der Greifvorrichtungs-Längsachse, welcher in beiden Stellungen unterschiedlich ist.

Diese Beschreibung einer gattungsbildenden Greifvorrichtung trifft auf eine Vielzahl von Greifvorrichtungen zu, etwa auch auf roboterbetriebene Greifvorrichtungen, bei welchen Greifbacken durch entsprechende Aktuatoren aufeinander zu und voneinander weg bewegt werden.

Bei Probenbehältern, wie sie üblicherweise in Laboren, insbesondere Laboren mit hohem Automatisierungsgrad, verwendet werden, besteht für herkömmliche Greifvorrichtungen das Problem, dass Probenbehälter häufig quasi-zylindrisch ausgebildet sind, jedenfalls längs einer Probenbehälterachse wesentlich größere Abmessungen aufweisen als in radialer Richtung orthogonal zur Probenbehälterachse.

Überdies werden häufig mehrere Probenbehälter gleichzeitig durch sogenannte Mehrfach-Pipettierköpfe beladen und entladen, so dass die häufig axial länglichen und radial schlanken Probenbehälter matrixartig mit im Wesentlichen parallelen Probenbehälterachsen in Probenbehälteraufnahmen mit geringem radialen Abstand voneinander aufgenommen sind.

Durch die geringe radiale Abmessung der Probenbehälter, durch das in der Regel tiefe Einragen in die Probenbehälteraufnahme und durch den geringen Abstand zwischen benachbarten Probenbehältern in Matrixanordnungen ist für den Angriff einer automatisierten Greifvorrichtung zum einen nur sehr wenig Angriffsfläche an einem einzelnen Probenbehälter vorhanden und ist überdies nur ein sehr geringer Manövrierraum zwischen benachbarten Probenbehältern vorhanden.

Die vorliegende Erfindung hat sich zur Aufgabe gesetzt, eine Greifvorrichtung bereitzustellen, mit welcher Probenbehälter sicher gegriffen werden können.

Dabei spielen so genannte "forensische Probenbehälter" als Greifobjekte eine besondere Rolle, da diese im besonderen Maße vor jeglicher Art von Verunreinigungen bewahrt werden sollen, so dass für diese eine möglichst durchgängige automatisierte Handhabung, etwa auch unter Rein- und Reinstraumbedingungen, wünschenswert ist. Dabei ist insbesondere, aber nicht nur, an so genannte forensische Probenbehälter gedacht, welche einen Innenbehälterabschnitt und einen Außenbehälterabschnitt aufweisen, wobei der Außenbehälterabschnitt den Innenbehälterabschnitt außen umgibt und wobei die beiden Behälterabschnitte relativ zueinander längs der Probenbehälterachse verlagerbar sind. Bei dieser Art von forensischen Probenbehältern kann durch die Verwendung von Innen- und Außenbehältern nicht nur eine Probe in den Innenbehälter eingebracht werden, sondern die Probe kann labortechnisch verarbeitet und sich daraus ergebende Lösungen, Spülungen und dergleichen der Probe können im Außenbehälter aufgefangen werden, ohne dass der Probenbehälter geöffnet werden muss.

Mit "Probenbehälter" ist in der vorliegenden Anmeldung das Probenbehältergefäß, das wie oben beschrieben auch mehrteilig sein kann, einschließlich eines etwaig vorhandenen, das Behältergefäß verschließenden Deckels bezeichnet.

Die oben genannte Aufgabe wird in ihrer allgemeinsten Form erfindungsgemäß gelöst durch eine Greifvorrichtung gemäß Anspruch 1, bei welcher unter anderem eine Einrichtung aus Greifeingriffseinrichtung und Betätigungseinrichtung eine Betätigungsgeometrie und die jeweils andere Einrichtung eine Betätigungsgegengeometrie aufweist, wobei die Betätigungseinrichtung relativ zur Greifeingriffseinrichtung axial beweglich ist zwischen einer ersten axialen Relativstellung und einer zweiten axialen Relativstellung, wobei jeder axialen Relativstellung ein unterschiedlicher Grad an Eingriff, insbesondere Anlageeingriff, zwischen der Betätigungsgeometrie und der Betätigungsgegengeometrie und, dadurch bewirkt, eine andere Stellung aus Eingriffsstellung und Freigabestellung der wenigstens einen beweglichen Greifbacke zugeordnet ist.

Durch die axiale Relativbeweglichkeit von Greifeingriffseinrichtung und Betätigungseinrichtung wird zur Bewegung der wenigstens einen Greifbacke der Greifeingriffseinrichtung kaum, idealerweise kein, Manövrierraum in radialer Richtung um die Greifvorrichtung herum benötigt. Somit kann durch axiale Relativbewegung von Betätigungseinrichtung und Greifeingriffseinrichtung die wenigstens eine verstellbare Greifbacke zwischen ihrer Freigabestellung und ihrer Eingriffsstellung verstellt werden.

Die Verstellung der wenigstens einen Greifbacke zwischen der Freigabestellung und der Eingriffstellung erfolgt durch Änderung des Grads an Eingriff zwischen der Betätigungsgeometrie und der Betätigungsgegengeometrie. Beispielsweise können die genannten Geometrien in einer axialen Relativstellung vollständig außer Eingriff sein, wobei diesem Grad an Eingriff der Geometrien miteinander die eine Stellung aus Freigabestellung und Eingriffstellung der wenigstens einen Greifbacke zugeordnet ist. Ausgehend von dieser Situation kann durch axiale Relativbewegung der Greifeingriffseinrichtung und der Betätigungseinrichtung zur jeweils anderen axialen Relativstellung der Grad an ein Eingriff der Geometrien derart geändert, insbesondere erhöht, werden, dass durch den sich ändernden Grad an Eingriff eine Verstellung der wenigstens einen Greifbacke in die jeweils andere ihrer Stellungen erfolgt.

Dabei müssen jedoch in der einen axialen Relativstellung die Betätigungseinrichtung und die Greifeingriffseinrichtung nicht notwendigerweise außer Eingriff sein. Flächenbereiche von Betätigungsgeometrien und Betätigungsgegengeometrien können durchaus bereits in Anlage aneinander sein. In diesem Falle kann der Grad an Eingriff zwischen den Geometrien durch Änderung der Größe oder/und der Lage von Anlageflächen, längs welcher sich die beiden Geometrien berühren, oder/und durch Änderung der über die Anlagefläche übertragenden Kraft zwischen den beiden Geometrien geändert werden.

Grundsätzlich sind neben dem genannten Anlageeingriff zwischen den Geometrien, welche aufgrund der einfachen und unmittelbaren Kraftübertragung bevorzugt ist, auch beliebige andere Eingriffsarten denkbar, so lange diese eine Kraftübertragung von der Betätigungseinrichtung auf die Greifeingriffseinrichtung zur Verstellung der wenigstens einen verstellbaren Greifbacke ermöglichen.

Grundsätzlich reicht zwar die Verstellung einer Greifbacke gegen eine oder mehrere von dieser bezüglich der Greifvorrichtungs-Längsachse mit radialem Abstand angeordneten weiteren Greifbacken aus, um einen Probenbehälter zwischen den genannten Greifbacken zu klemmen. Bevorzugt sind jedoch mehrere oder sogar alle vorhandenen Greifbacken in radialer Richtung bezogen auf die Greifvorrichtungs-Längsachse zwischen ihrer Freigabestellung und ihrer Eingriffsstellung verstellbar. Dies schafft die Voraussetzung, dass ein Probenbehälter stets ohne radiale Verlagerung gegriffen werden kann, sofern beim Greifvorgang die Greifvorrichtungs-Längsachse und die Probenbehälter-Längsachse im Wesentlichen kollinear ausgerichtet sind.

Die Greifvorrichtungs-Längsachse soll im Zweifel jene Längsachse sein, von welcher einander wirkungsmäßig zugeordnete Greifbacken in ihrer Freigabestellung gleich großen radialen Abstand aufweisen. Einander bezüglich der Greifvorrichtungs-Längsachse diametral gegenüberliegende Greifbacken können als einander wirkungsmäßig zugeordnet gelten. Dabei kann eine Greiferbacke auch durch zwei zueinander geneigte und mit Abstand voneinander angeordnete Greifbacken mit gleicher Greifkraftwirkungsrichtung wie die einzelne Greifbacke ersetzt sein und umgekehrt. Definieren Greifbacken in der Freigabestellung einen durch sie um- oder einbeschriebenen Kreis oder Zylinder oder eine um- oder einbeschriebene Ellipse oder elliptischen Zylinder, dann kann die Greifvorrichtungs-Längsachse das Zentrum des Kreises oder der Ellipse durchsetzen bzw. die jeweilige Zylinderachse sein.

Grundsätzlich kann weiter daran gedacht sein, dass die Betätigungsgeometrie und die Betätigungsgegengeometrie doppelt wirkend ausgebildet sind, also bei axialer Relativverstellung von Betätigungseinrichtung und Greifeingriffseinrichtung abhängig von der Richtung der Relativbewegung eine Bewegung der wenigstens einen Greifbacke von der Freigabestellung in die Eingriffsstellung und umgekehrt bewirkbar ist. Dies kann beispielsweise in Form einer Kurven- oder Kulissensteuerung, etwa durch einen in einem Langloch als Betätigungsgeometrie geführten Vorsprung als Betätigungsgegengeometrie realisiert sein, bei welcher eine Mantelfläche des Vorsprungs je nach Relativbewegungsrichtung von Greifeingriffseinrichtung und Betätigungseinrichtung an unterschiedlichen Flanken des Langlochs anliegt.

Da diese grundsätzlich im Rahmen der vorliegenden Erfindung mögliche Weiterbildung jedoch in radialer Richtung Bauraum fordernd sein kann, ist eine andere Ausführungsform der vorliegenden Erfindung bevorzugt:
Dann nämlich, wenn von den wenigstens zwei Greifbacken wenigstens eine, vorzugsweise mehrere, besonders bevorzugt alle, federnd an einem Grundkörper der Greifeingriffseinrichtung vorgesehen sind, kann die Bewegung in eine der Stellungen der Greifbacken durch Federvorspannung erfolgen und braucht lediglich die Bewegung der Greifbacke in die jeweils andere Stellung durch die Relativbewegung von Betätigungseinrichtung und Greifeingriffseinrichtung induziert zu werden. Besonders effektiv und auf engem Bauraum anordenbar haben sich dabei Biegefedern gezeigt, die zur Verstellung der Greifbacken in radialer Richtung bezogen auf die Greifvorrichtungs-Längsachse um eine zu dieser Längsachse orthogonale Biegeachse biegbar sind.

In diesem Falle kann nämlich die Biegefeder in axialer Richtung von dem Grundkörper abstehen, um um die gewünschte Biegeachse biegbar zu sein, so dass das Vorsehen der Biegefeder wenigstens an ihrem greifbackennäheren Längsende keinen radialen Bauraum fordert und somit die Greifvorrichtung insgesamt radial schlank ausgebildet werden kann. Die wenigstens eine federnd aufgenommene Greifbacke kann dann mit axialem Abstand zum Grundkörper vorgesehen sein.

Dann, wenn die Greifeingriffseinrichtung die oben beschriebene wenigstens eine Biegefeder umfasst, welche mit wenigstens einer Greifbacke versehen ist und welche sich längs der Greifvorrichtungs-Längsachse zwischen Greifbacke und Grundkörper erstreckt und um eine zur Greifvorrichtungs-Längsachse orthogonale Biegeachse biegbar ist, kann die Biegewirkung besonders einfach durch einstückiges Ausbilden der Biegefeder mit dem Grundkörper bereitgestellt sein. Dann kann die zur Auslenkung der Biegefeder notwendige Kraft durch Materialwahl, Gestaltwahl der Biegefeder und Wahl des Biegekraftangriffspunktes bestimmt werden. Zur oben genannten vorteilhaften zentralen Greifbarkeit von Probenkörpern ist es auch hier bevorzugt, wenn vorzugsweise mehrere Biegefedern, besonders bevorzugt alle Biegefedern, einstückig mit dem Grundkörper ausgebildet sind. Zur Bereitstellung möglichst einheitlicher Betätigungsbedingungen können die Biegefedern im Wesentlichen gleich ausgebildet sein.

Zusätzlich oder alternativ kann gemäß einer Weiterbildung der vorliegenden Erfindung die Biegefeder längs ihrer Erstreckungsrichtung, also bei der oben genannten bevorzugten Anordnung längs der Greifvorrichtungs-Längsachse, unterschiedliche Federhärten aufweisen, um eine vorbestimmte Biegecharakteristik, insbesondere einen vorbestimmten Biegekraft-Biegeweg-Verlauf zu erzielen. Außerdem kann durch das Vorsehen unterschiedlicher Federhärten längs der Erstreckungsrichtung der Biegefeder der Bereich der Biegefeder vorbestimmt werden, in welchem die Biegung der Biegefeder um ihre Biegeachse im Wesentlichen geschieht. Es kann somit ein Hauptabwinkelbereich bereitgestellt werden.

Die Bereitstellung unterschiedlicher Federhärten längs der Erstreckungsrichtung der Biegefeder erfolgt vorteilhaft mit geringem Aufwand durch Bereitstellung unterschiedlicher Materialstärken der Biegefeder in radialer Richtung oder/und in Umfangsrichtung um die Greifvorrichtungs-Längsachse.

Bevorzugt ist die Biegefeder in einem grundkörpernäheren Bereich mit einer geringeren Federhärte ausgestattet, beispielsweise in radialer Richtung dünner ausgebildet, um durch Bereitstellung von Betätigungsgeometrie oder Betätigungsgegengeometrie mit Abstand von diesem Bereich im Falle einer Biegekraftübertragung durch den Eingriff zwischen Betätigungsgeometrie und Betätigungsgegengeometrie eine möglichst große Hebelwirkung bereitstellen zu können.

Weiterhin ist bevorzugt die Biegefeder zwischen der Greifbacke und einem Biegekrafteinleitungsort zur Einleitung von Biegekraft in die Biegefeder, also vorzugsweise an einem Ort, an welchem eine Betätigungsgeometrie oder Betätigungsgegengeometrie unmittelbar an der Biegefeder vorgesehen ist, mit geringerer Federhärte auszubilden, um eine Relativfederung der Greifbacken relativ zum Biegekrafteinleitungsort zu ermöglichen. Dadurch kann die von den Greifbacken auf den Probenbehälter einwirkende Greifkraft nach Maßgabe der im Bereich zwischen der Greifbacke und dem Biegekrafteinleitungsort vorgesehenen Federhärte begrenzt werden, was das Risiko einer Beschädigung des Probenbehälters beim Greifen reduziert oder gar ausschließt.

Die wenigstens eine federnd vorgesehene Greifbacke kann somit durch die oben beschriebene Biegefeder, aber auch durch eine beliebige andere Federanordnung, in eine ihrer Stellungen vorgespannt sein.

Dann, wenn man die Greifkraft, mit welcher die Greifbacken eine Abschnitt des Probenbehälters zwischen sich greifen, begrenzen möchte, bietet sich eine Federvorspannung in die Eingriffstellung an, die dann durch axiale Relativbewegung von Betätigungseinrichtung und Greifeingriffseinrichtung gelöst werden kann.

Bevorzugt ist jedoch die Vorspannung der wenigstens einen Biegefeder in ihre Freigabestellung, so dass das Freigeben eines Probenbehälters stets erfolgen kann, während der Greifvorgang, also die Verstellung der wenigstens einen Greifbacke in ihre Eingriffsstellung, durch axiale Relativbewegung der oben genannten Einrichtungen erfolgt. Die Begrenzung der Greifkraft kann dann dennoch durch die oben genannten Maßnahme der Einstellung der Federhärte in einem Bereich zwischen Biegekrafteinleitungsort und Greifbacke erreicht werden.

Zusätzlich oder alternativ kann die Biegefeder zur Vereinfachung des Aufbaus der Greifvorrichtung, insbesondere zur Verringerung der benötigten Anzahl an Bauteilen, integral mit der Greifbacke ausgebildet sein, so dass die Greifbacke einen integralen Abschnitt der Biegefeder bildet. Dies muss jedoch nicht so sein. Je nach zu greifendem Probenbehälter kann auch an eine gesondert ausgebildete Greifbacke gedacht sein, welche an eine vorhandene Biegefeder oder an ein anderes Bauteil der Greifeinrichtungsvorrichtung angefügt ist. Dadurch können beispielsweise Biegefeder und Greifbacken aus unterschiedlichen Materialien gebildet sein, was insbesondere für empfindliche Probenbehälter vorteilhaft sein kann.

Grundsätzlich kann mit der hier diskutierten Greifvorrichtung sowohl von radial außen nach radial innen, also durch Annäherung der wenigstens einen Greifbacke an die Greifvorrichtungs-Längsachse, als auch von radial innen nach radial außen, also durch Entfernung der Greifbacke von der Greifvorrichtungs-Längsachse gegriffen werden. Im erstgenannten Fall, welcher beispielsweise zum Greifen von von der Greifvorrichtungs-Längsachse weg weisenden Flächenabschnitten am Probenbehälter dient, liegt die Eingriffsstellung der wenigstens einen Greifbacke näher an der Greifvorrichtungs-Längsachse als die Freigabestellung. Im zweitgenannten Fall, welcher beispielsweise zum Greifen von zur Greifvorrichtungs-Längsachse hin weisenden Flächenabschnitten am Probenbehälter dient, ist es umgekehrt.

Der erstgenannte Fall ist bevorzugt, da die bei dem geschilderten Greifverhalten von den Greifbacken gegriffenen nach radial außen von der Greifvorrichtungs-Längsachse weg weisenden Angriffsflächen an einem Probenbehälter immer vorhanden sind, während die Angriffsflächen für das Greifverhalten des zweitgenannten Falls in der Regel nur bei unverschlossenen Probenbehältern oder bei Probenbehältern mit eigens dafür gestalteten Deckeln vorhanden sind.

In dem bevorzugten Fall also, wenn die wenigstens eine Greifbacke von ihrer Freigabestellung in die Eingriffsstellung in radialer Richtung auf die Greifvorrichtungs-Längsachse zu bewegt wird, kann die Betätigungseinrichtung Platz sparend derart vorgesehen sein, dass sie die Greifeingriffseinrichtung radial außen umgibt. Die Betätigungseinrichtung kann sogar einen gewissen mechanischen Schutz für die Greifeingriffseinrichtung bilden, wenn sie die Greifeingriffseinrichtung radial außen einhüllt. Hierzu kann die Betätigungseinrichtung besonders bevorzugt einen sich längs der Greifvorrichtungs-Längsachse erstreckenden Rohrabschnitt aufweisen, in welchem ein Abschnitt der Greifeingriffseinrichtung aufgenommen ist. Der vom Rohrabschnitt der Betätigungseinrichtung aufgenommene Abschnitt der Greifeingriffseinrichtung ist dabei in der Regel je nach axialer Relativstellung der beiden Einrichtungen entweder unterschiedlich groß oder ein anderer. Bevorzugt ist dann ein größerer Abschnitt oder sind wenigstens die Greifbacken von der Betätigungseinrichtung umhüllt, wenn die Betätigungseinrichtung und die Greifeingriffseinrichtung sich in einer axialen Relativstellung befinden, welche der Eingriffstellung der wenigstens einen verstellbaren Greifbacke zugeordnet ist. Dadurch kann der Greifeingriff der Greifbacken mit dem Probenbehälter durch die Betätigungseinrichtung, insbesondere durch deren Ausbildung als ein Rohrabschnitt, zumindest am greifbackennäheren axialen Längsende derselben nach radial außen abgeschirmt sein, wodurch der Greifeingriff von außen weniger störanfällig ist.

Die Rohrachse des Rohrabschnitts kann dann abweichend von der oder in Ergänzung zur obigen Definition die Greifvorrichtungs-Längsachse sein.

Besonders einfach kann die zur Verstellung der wenigstens einen verstellbaren Greifbacke erforderliche Kinematik dadurch erreicht werden, dass eine Einrichtung aus Greifeingriffseinrichtung und Betätigungseinrichtung an einer zur jeweils anderen Einrichtung zugewandten Fläche einen Vorsprung als Betätigungsgeometrie aufweist.

Bevorzugt weist dieser Vorsprung eine in axiale Richtung wirkende Rampe oder Schrägfläche auf, so dass eine Änderung der axialen Relativstellung der beiden Einrichtungen aus Greifeingriffseinrichtung und Betätigungseinrichtung zur Änderung des Eingriffsgrads zwischen Betätigungsgeometrie und Betätigungsgegengeometrie sowie zur Änderung der radialen Relativstellung der Greifbacken führt und dabei Kräfte nicht stoßartig auftreten und auf die Greifvorrichtung rückwirken.

Da mit dem Vorsehen eines radialen Vorsprungs als Betätigungsgeometrie in der Regel eine Materialanhäufung und damit eine Stabilitätserhöhung verbunden ist, ist bevorzugt die Betätigungsgeometrie an der Greifeingriffseinrichtung vorgesehen. Dort bietet sich vor allem die wenigstens eine mit wenigstens einer Greifbacke versehene Biegefeder als Ort des Vorsehens der Betätigungsgeometrie an. Dann bildet die Betätigungsgeometrie an der Biegefeder den oben genannten Ort der Biegekrafteinleitung in die Biegefeder.

Dann, wenn die Betätigungseinrichtung, wie oben geschildert, einen Rohrabschnitt aufweist, in welchem ein Abschnitt der Greifeinrichtungseinrichtung aufgenommen ist, kann ein den Greifbacken zugewandter Rohrabschnittsrand oder/und eine Rohrabschnittsinnenfläche zur Realisierung der Betätigungsgegengeometrie beitragen. In dem besonders bevorzugten Fall, dass der Rohrabschnittsrand oder/und die Rohrabschnittsinnenfläche die Betätigungsgegengeometrie sind, kann die Ausbildung einer gesonderten Betätigungsgegengeometrie an der Betätigungseinrichtung entfallen, was den Fertigungs- und Montageaufwand gering hält.

Um mit der Greifvorrichtung nicht nur einen Probenbehälter greifen, sondern auch einen an diesem vorgesehenen Schraubverschluss öffnen zu können, kann daran gedacht sein, dass die Betätigungseinrichtung in Umfangsrichtung um die Greifvorrichtungs-Längsachse im Wesentlichen unverdrehbar an der Greifeingriffseinrichtung aufgenommen ist.

In der Regel wird die Greifvorrichtung mit einem Handhabungsgerät, wie etwa einem Ein- oder Mehrachsenroboter oder einem anderen Automatisierungsgerät, verbunden sein. Dabei ist die vom Handhabungsgerät auszuführende Kinematik dann besonders einfach, wenn ein die Greifbacken tragendes Bauteil im Wesentlichen starr mit dem Handhabungsgerät verbindbar ist. Betrachtet man in diesem Fall das Handhabungsgerät als ortsfestes Gestell, ist es also vorteilhaft, wenn die Betätigungseinrichtung axial verlagerbar an der Greifeinrichtung aufgenommen ist. Dann verändert sich nämlich durch Relativverlagerung von Betätigungseinrichtung und Greifeingriffs-Einrichtung die axiale Lage der Greifbacken relativ zum Handhabungsgerät nicht, so dass auch die vom Handhabungsgerät angefahrene axiale Relativstellung der Greifbacken relativ zu dem zu greifenden Probenbehälter sich bei Verstellung der Greifbacken zwischen ihrer Freigabestellung und ihrer Eingriffstellung und umgekehrt vorteilhafterweise nicht ändert.

Um mit der vorliegend diskutierten Greifvorrichtung auch Schraubbewegungen, also insbesondere das Auf- und Zuschrauben von Schraubverschlüssen der Probenbehälter möglichst einfach und sicher realisieren zu können, weist die Greifvorrichtung zur Übertragung von Drehmoment auf ein Bauteil des Probenkörpers eine Formschlussvorrichtung auf, welche gesondert von allen Greifbacken ausgebildet ist, und welche zum Formschlusseingriff mit einer Formschlussgegenvorrichtung am Probenbehälter ausgebildet ist.

Die Formschlussvorrichtung kann beispielsweise ein Prisma aufweisen oder sogar sein. Aufgrund der gewünschten radial möglichst schlanken Bauweise ist vorgesehen, dass die Formschlussvorrichtung, insbesondere in Form eines Prismas, sich längs der Greifvorrichtungs-Längsachse erstreckt und zur Übertragung eines Drehmoments um diese Längsachse ausgebildet ist.

Das Prisma kann dabei eine entsprechende Ausnehmung als Formschlussgegenvorrichtung zur Drehmomentübertragung eingefügt werden.

Selbstverständlich kann auch die Formschlussvorrichtung an der Greifvorrichtung eine Ausnehmung und die Formschlussgegenvorrichtung am Probenbehälter einen Vorsprung, insbesondere ein Prisma, umfassen. Jedoch sind die Probenbehälter häufig aus Kunststoff gefertigt, so dass eine vorspringende Formschlussgegengeometrie aus Kunststoff ein höheres Versagensrisiko mit sich bringt als eine entsprechende Ausnehmung in einem Kunststoffbauteil des Probenbehälters.

Zum Schutz der Formschlussvorrichtung kann die Greifvorrichtung eine Schutzhülle aufweisen, welche verstellbar ist zwischen einer Schutzstellung, in der sie die Formschlussvorrichtung im Wesentlichen umgibt, und einer Rückzugsstellung, in welcher sie von der Formschlussvorrichtung zurückgezogen ist und wenigstens eine Formschlussgeometrie derselben freigibt. Um sicherzugehen, dass die Formschlussvorrichtung bei Nichtgebrauch stets von der Schutzhülle geschützt ist, kann die Schutzhülle in ihre Schutzstellung federvorgespannt sein.

Die Schutzhülle kann in einem einfachen und deshalb bevorzugten Fall ein die Formschlussvorrichtung umgebendes Rohrstück sein.

Zur Betätigung des Probenbehälters, insbesondere zur Relativverschiebung von Innen- und Außenbehälterabschnitt bei forensischen Probenbehältern, kann an der Greifvorrichtung eine Betätigungsanordnung vorgesehen sein, welche zum Eingriff an dem Probenbehälter, insbesondere an einer dort vorgesehenen Betätigungsgegenanordnung, ausgebildet ist. Um eine radial möglichst schlanke Bauform der Greifvorrichtung zu erhalten, kann die Betätigungsanordnung einen oder mehrere sich in axialer Richtung erstreckende Betätigungsfortsätze aufweisen. Die Betätigungsfortsätze können in ähnlicher Weise axial von einem Bauteil der Greifvorrichtung abstehen, wie die oben genannten Biegefedern von einem Grundkörper der Greifeingriffseinrichtung vorzugsweise in axialer Richtung abstehen. Da der Betätigungsangriff am Probenbehälter bevorzugt an dessen Außenfläche erfolgt, ist die Betätigungsanordnung, insbesondere in Form von axial abstehenden Betätigungsfortsätzen, vorzugsweise an der Betätigungseinrichtung ausgebildet, insbesondere wenn diese, wie oben dargelegt, die Greifeinrichtungseinrichtung radial außen umgibt. Die Greifvorrichtung kann mit den in dieser Anmeldung darüber hinaus genannten technisch vorteilhaften Merkmalen weitergebildet sein.

In der obigen Beschreibung wurden die Probenbehälter erwähnt, um eine Beschreibung von Wechselwirkungen der Greifvorrichtung mit den Probenbehältern zu beschreiben. Der Schutz der vorliegenden Erfindung soll sich jedoch auch auf eine Greifvorrichtung, wie sie oben erläutert ist, mit einem Probenbehälter erstrecken, insbesondere mit einem forensischen Probenbehälter, wie er eingangs beschrieben wurde.

Besonders bevorzugt sind bei Verwendung von forensischen Probenbehältern der Innenbehälterabschnitt und der Außenbehälterabschnitt in wenigstens einer ihrer Relativstellungen sicherbar, etwa durch eine überwindbare Verrastung oder/und durch eine Formschlussverriegelung, etwa in Form einer Bajonettverriegelung. Bevorzugt ist die wenigstens eine sicherbare Stellung diejenige, in welcher der forensische Probenbehälter eine größere axiale Länge aufweist.

Weiterhin weist der Probenbehälter einen Deckel, insbesondere schraubverschließbaren Deckel auf, an welchem der Probenbehälter vorzugsweise durch die Greifbacken der Greifvorrichtung gegriffen wird. Hierzu kann der Deckel in axialer Richtung gestuft ausgebildet sein mit einem dem Behälter fern liegenden Deckelteil geringeren Durchmessers und mit einem mit dem Behälter koppelbaren Deckelteil größeren Durchmessers. Bevorzugt findet dann der Greifeingriff der Greifbacken an dem Deckelteil mit kleinerem Durchmesser statt.

Nachfolgend wird die vorliegende Erfindung anhand der beiliegenden Darstellungen näher erläutert. Es stellt dar:
- Fig. 1a bis 1d: Ansichten einer erfindungsgemäßen Ausführungsform einer Greifvorrichtung der vorliegenden Anmeldung,
- Fig. 2a bis 2d: die Greifvorrichtung der Fig. 1a bis 1d mit gegriffenem Probenbehälter, wobei Figuren mit gleichem Kleinbuchstaben in ihrer Perspektive einander entsprechen,
- Fig. 3a bis 3e: Ansichten der Greifvorrichtung mit gegriffenem Probenbehälter, wie in den Fig. 2a bis 2d dargestellt, jedoch mit gegenüber der Fig. 2 relativ zueinander bewegten Probenbehälterteilen.

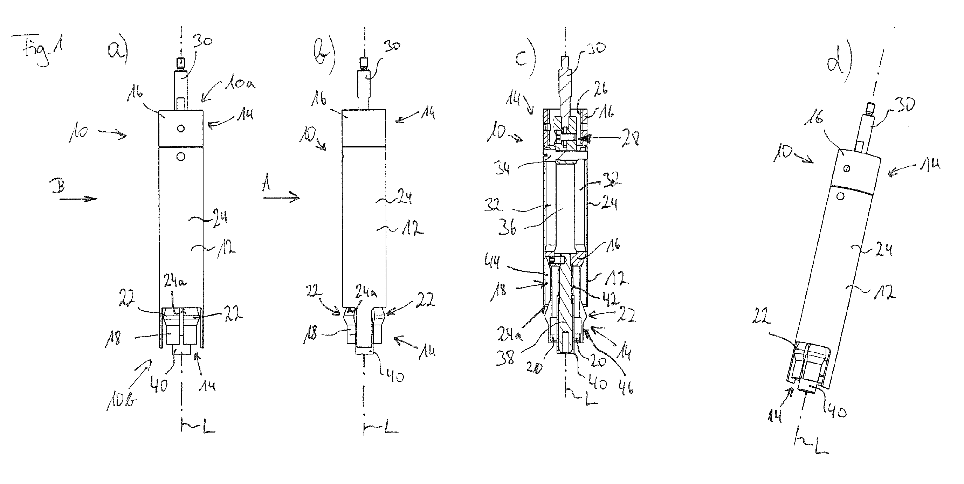

In den Fig. 1a bis 1d ist eine Greifvorrichtung in einer erfindungsgemäßen Ausführungsform allgemein mit 10 bezeichnet. Die Fig. 1a und 1b sind dabei Aufrissdarstellungen mit Blickrichtung orthogonal zur Greifvorrichtungs-Längsachse L, wobei die Blickrichtungen der Fig. 1a und 1b miteinander einen rechten Winkel einschließen. Die Fig. 1b ist eine Betrachtung der Greifvorrichtung 10 von Fig. 1a in Richtung des Pfeils B. Die Darstellung der Fig. 1a ist eine Betrachtung der Greifvorrichtung 10 in Fig. 1b in Richtung des Pfeiles A.

Die Greifvorrichtung 10 umfasst eine Betätigungseinrichtung 12 und eine Greifeingriffseinrichtung 14, welche einen Grundkörper 16 und davon, bezogen auf die Greifvorrichtungs-Längsachse L, in axialer Richtung abstehende Biegefedern 18 (siehe Fig. 1 c) aufweisen kann.

Im dargestellten Beispiel sind an dem Grundkörper 16 insgesamt vier Biegefedern 18 vorgesehen. Diese Anzahl kann jedoch auch geringer oder höher sein.

An dem dem Grundkörper 16 fernen Längsende der Biegefedern 18 ist an jeder Biegefeder 18 eine Greifbacke 20 vorgesehen, welche mit ihrer Greifbackenfläche im dargestellten Beispiel zur Greifvorrichtungs-Längsachse L hinweist.

An jeder Biegefeder 18 kann eine Betätigungsgeometrie 22 vorgesehen sein, welche im dargestellten Beispiel als radial nach außen zur Betätigungseinrichtung 12 hinweisender Vorsprung ausgebildet ist.

Die Betätigungseinrichtung 12, welche bevorzugt einen Rohrabschnitt 24 aufweist, der sich kollinear mit der Greifeingriffseinrichtung 14 erstreckt und vorteilhafterweise einen axialen Abschnitt der Greifeingriffseinrichtung 14 in Umfangsrichtung um die Greifvorrichtungs-Längsachse L radial außen umgibt, weist einen Randabschnitt 24a auf, welcher vorteilhafterweise als Betätigungsgegengeometrie dienen kann.

Die Greifvorrichtung 10 des hier gezeigten Ausführungsbeispiels kann mit ihrem kopplungsseitigen Längsende 10a, welches dem greiferseitigen Längsende 10b axial entgegengesetzt ist, an ein Handhabungsgerät starr gekoppelt sein, etwa durch ein Innengewinde 26 (siehe Fig. 1 c).

Die Betätigungseinrichtung 12 kann mittels einer Kopplungsausbildung 28, welche in der in den Fig. 1a bis 1d gezeigten axialen Relativstellung von Betätigungseinrichtung 12 und Greifeingriffseinrichtung 14 von der Greifeingriffseinrichtung umgeben sein kann, mit einem Aktuator 30 des ansonsten nicht weiter dargestellten Handhabungsgeräts gekoppelt sein.

Wie man in Fig. 1c erkennt, welche eine Querschnittsdarstellung der Greifvorrichtung 10 in einer die Greifvorrichtungs-Längsachse L enthaltenden und orthogonal zur Zeichenebene der Fig. 1 a orientierten Schnittebene ist, kann die Greifeingriffseinrichtung 14 einen in axialer Richtung verlaufenden Schlitz 32 aufweisen, in welchem die Betätigungseinrichtung 12 um die Greifvorrichtungs-Längsachse L unverdrehbar zur Relativbewegung in axialer Richtung geführt ist, etwa mittels eines den Schlitz 32 durchsetzenden Befestigungselements 34, mit welchem der Rohrabschnitt 24 der Betätigungseinrichtung 12 mit dem Kopplungsabschnitt 28 gekoppelt sein kann.

Der Grundkörper 16 der Greifeingriffseinrichtung 14 kann rohrförmig, also mit einer zentralen Ausnehmung 36 gebildet sein, in welcher die Kopplungsausbildung 28 axialbeweglich aufgenommen sein kann.

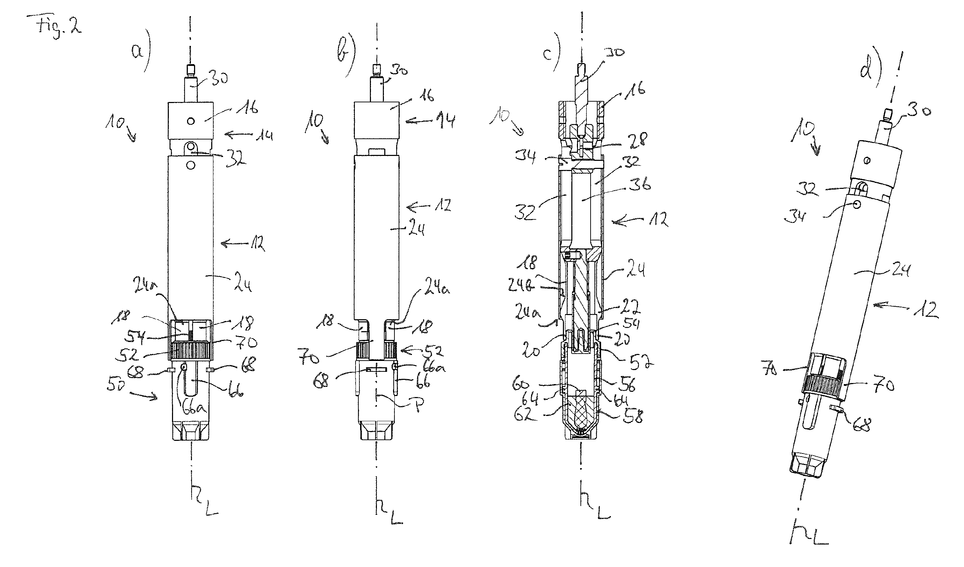

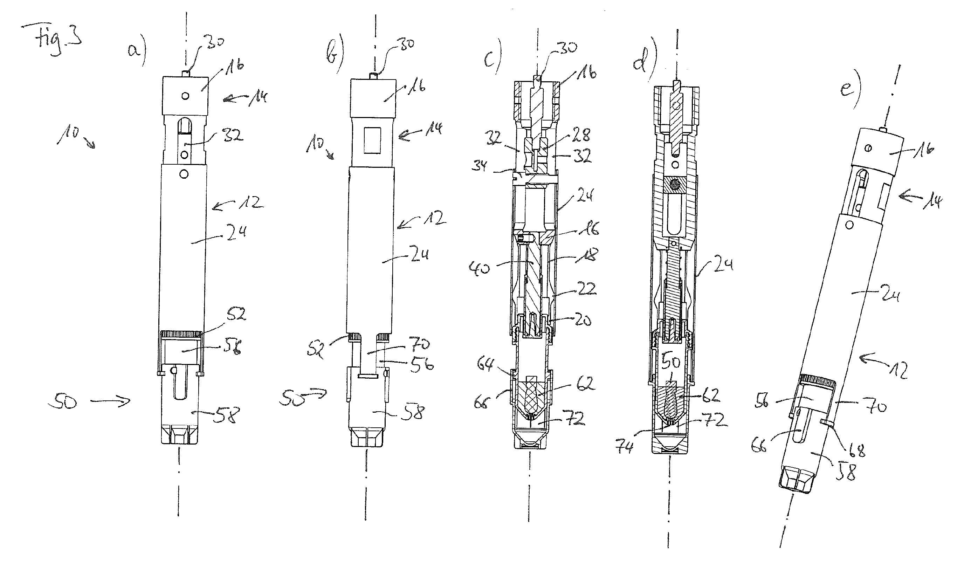

Wie weiter der Fig. 1c entnommen werden kann, ist die Greifvorrichtung 10, insbesondere die Greifeingriffseinrichtung 14, mit einem Formschlusswerkzeug 38 versehen, welches sich bevorzugt konzentrisch zur Greifvorrichtungs-Längsachse L in axialer Richtung erstreckt. Diese Formschlussvorrichtung 38 kann zur Drehmomentübertragung zwischen der Greifvorrichtung 10 und einem gegriffenen Probenbehälter, der eine Formschlussgegenvorrichtung aufweist, welche sich im gegriffenen Zustand des Probenbehälters in Formschlusseingriff mit der Formschlussvorrichtung 18 befindet (siehe Fig. 2c und 3c und 3d), ein Prisma sein, also ein länglicher Gegenstand mit polygonaler Kontur in einem zur Greifvorrichtungs-Längsachse L orthogonalen Schnitt.

Weiter kann die Greifvorrichtung 10 eine Schutzhülle 40 aufweisen, welche vorzugsweise durch eine Feder 42 (siehe Fig. 1c) in eine Schutzstellung vorgespannt ist, welche in den Fig. 1a bis 1d dargestellt ist und in welcher die Schutzhülle 40 die Formschlussvorrichtung 38 am greiferseitigen Längsende 10b radial außen umgibt.

Die Formschlussvorrichtung 38 kann mit geeigneten Befestigungsmittein, etwa einer Madenschraube, an der Greifeingriffseinrichtung 14, insbesondere an deren Grundkörper 16, festgelegt sein.

Wie oben bereits in Zusammenhang mit Fig. 1c dargelegt wurde, sind die Betätigungseinrichtung 12 und die Greifeingriffseinrichtung 14 in axialer Richtung längs der Greifvorrichtungs-Längsachse L relativ zueinander beweglich, wobei im vorliegenden Beispiel der Relativbewegungsweg durch die Länge des Führungsschlitzes 32 vorgegeben ist.

In den Fig. 1a bis 1d sind die Betätigungseinrichtung 12 und die Greifeingriffseinrichtung 14 in einer ersten axialen Relativstellung dargestellt, in welcher sich die Greifbacken 20 in ihrer Freigabestellung befinden, in der sie in der hier dargestellten Ausführungsform eine größere Entfernung von der Greifvorrichtungs-Längsachse L aufweisen als in der später erläuterten Eingriffsstellung.

Wenn sich ausgehend von der in den Fig. 1a bis 1d dargestellten ersten Relativstellung der Betätigungseinrichtung 12 und der Greifeingriffseinrichtung 14 die Betätigungseinrichtung 12 relativ zur Greifeingriffseinrichtung 14 axial den Greifbacken 20 annähert, wird der als Betätigungsgegengeometrie dienende Rand 24a des Rohrabschnitts 24 der Betätigungseinrichtung 12 an den die Betätigungsgeometrie bildenden Vorsprung 22 der Biegefedern 18 anstoßen und aufgrund der dem Vorsprung 22 gegebenen radialen Abmessung den Vorsprung 22 durch Anlageeingriff mit dem Rand 24a oder mit der Innenfläche 24b des Rohrabschnitts 24 gegen die Federkraft der Biegefedern 18 nach radial innen verlagern. Der radiale Abstand des radial äußersten Abschnitts des Vorsprungs 22 von der Greifvorrichtungs-Längsachse L ist hierzu bei entspannten Biegefedern 18 größer als der Innendurchmesser des Rohrabschnitts 24.

Zur Vermeidung unnötig hoher Bauteileanzahlen kann der Vorsprung 22 einstückig mit der jeweiligen Biegefeder 18 ausgebildet sein.

Vorteilhafterweise weisen die Biegefedern 18 einen ersten zwischen dem Grundkörper 16 und dem als Biegekrafteinleitungsort dienenden Vorsprung 22 gelegenen Biegeabschnitt 44 auf, in welchem die radiale Wandstärke der Biegefeder 18 gering ist, so dass dieser Bereich eine geringere Federhärte aufweist als etwa derjenige Axialbereich der Biegefedern 18, in welchem der Vorsprung 22 ausgebildet ist.

Weiter kann die Biegefeder 18 einen zwischen dem als Biegekrafteinleitungsort dienenden Vorsprung 22 und der jeweiligen Greifbacke 20 gelegenen Federabschnitt 46 aufweisen, in welchem wiederum die radiale Wandstärke der Biegefeder reduziert sein kann, um auch in diesem axialen Bereich die Federhärte der Biegefeder 18 gegenüber dem Bereich der Biegekrafteinleitung am Vorsprung 22 zu verringern. Hierdurch kann die Greifbacke 20 einer Biegefeder 18 relativ zum Vorsprung in radialer Richtung federn, wodurch die mit der Greifvorrichtung 10 erzielbare Greifkraft der Höhe nach begrenzt werden kann.

Die Fig. 2a bis 2d zeigen die Greifvorrichtung 10 in gleicher Perspektive wie die Darstellungen der Fig. 1a bis 1d, wobei gleiche Kleinbuchstaben der Fig. 1 und 2 gleichen Betrachtungsrichtungen entsprechen.

Die Fig. 2a bis 2d zeigen die Greifvorrichtung 10 mit gegriffenem Probenbehälter 50, also mit Greifbacken 20 in der Eingriffsstellung.

Diese Eingriffsstellung wurde erreicht durch axiale Relativbewegung der Betätigungseinrichtung 12 relativ zur Greifeingriffseinrichtung 14 in eine zweite axiale Relativstellung, in welcher der Rand 24a des Rohrabschnitts 24 der Betätigungseinrichtung 12 axial näher an den Greifbacken 20 gelegen ist als in der in den Fig. 1a bis 1d dargestellten ersten axialen Relativstellungen.

Dadurch gelangte der Vorsprung 22 an den Biegefedern 18 in Anlageeingriff an den Rand 24a und an die Innenfläche des rohrförmigen Abschnitts 24, wodurch die Greifbacken 20 an einen Greifabschnitt 54 des Deckels 52 des Probenbehälters 50 gelangt sind.

Der Deckel 52 kann auf einen Innenbehälterabschnitt 56 aufgeschraubt sein, welcher von einem Außenbehälterabschnitt 58 radial außen umgeben sein kann.

In dem Probenbehälter 50 ist in dessen Innenbehälterabschnitt 56 eine forensische Probe 60 hinterlegt, welche mit einer Analyseflüssigkeit 62 umgeben ist, die am Probenkörper 60 gebundene Stoffe zur weiteren Untersuchung chemisch oder/und physikalisch lösen kann.

Eine Probenbehälterachse P (siehe Fig. 2b) ist in dem gegriffenen Zustand des Probenbehälters 50 vorteilhafterweise kollinear mit der Greifvorrichtungs-Längsachse L.

Der Innenbehälterabschnitt 56 und der Außenbehälterabschnitt 58 sind relativ zueinander axial beweglich, wobei in den Fig. 2a bis 2d eine axiale Endstellung kürzester Länge des Probenbehälters 50 dargestellt ist.

Zur Führung der Relativbewegung vom Innenbehälterabschnitt 56 und Au-ßenbehälterabschnitt 58 können entsprechende Vorsprünge 64 an einem Behälterabschnitt, hier: am Innenbehälterabschnitt 56, vorgesehen sein und in entsprechenden Ausnehmungen 66 am jeweils anderen Behälterabschnitt, hier: am Außenbehälterabschnitt 58, geführt sein.

Durch eine entsprechende Ausnehmungsfortsetzung 66a in Umfangsrichtung kann der Probenbehälter 50 in einer axial ausgezogenen Relativstellung von Innenbehälterabschnitt 56 und Außenbehälterabschnitt 58, wie sie in den Fig. 3a bis 3e gezeigt ist, beispielsweise durch Bajonettverriegelung gesichert sein.

Zur Axialverstellung der beiden Behälterabschnitte 56 und 58 kann am Au-ßenbehälterabschnitt 58 eine Betätigungsgegenanordnung 68 in Form eines Radialvorsprungs gebildet sein, welche durch eine, vorzugsweise integral, an der Betätigungseinrichtung 12 vorgesehene Betätigungsanordnung 70 durch Anlageeingriff betätigbar ist.

Im dargestellten Beispiel ist die Betätigungsanordnung 70 ein axialer Fortsatz am Rohrabschnitt 24 der Betätigungseinrichtung 12.

Wie in den Fig. 3a bis 3e dargestellt ist, kann durch weitere Relativverlagerung zwischen der Betätigungseinrichtung 12 und der Greifeingriffseinrichtung 14 die Betätigungsanordnung 70 in Anlageeingriff mit der Betätigungsgegeneinrichtung 68 am Probenbehälter 50 gebracht und der Außenbehälterabschnitt 58 relativ zu dem mit dem Deckel 52 verschraubten Innenbehälterabschnitt 56 in axialer Richtung ausgezogen werden.

Dadurch entsteht im Außenbehälterabschnitt ein Auffangvolumen 72, in welches das mit aus dem Probenkörper 50 herausgelösten Probenstoffen versehene Lösungsmittel 62 durch entsprechend klein bemessene Öffnungen 74 am Innenbehälterabschnitt 56 zentrifugiert werden kann. Somit kann mit der vorliegenden Greifvorrichtung 10 ein Probenbehälter 50 ohne Eingriff durch eine Bedienperson nicht nur gegriffen, sondern labortechnisch bis zur Zentrifugierung und damit Filtration des Lösungsmittels 62 in das Aufnahmevolumen 72 am Außenbehälterabschnitt verarbeitet werden.

Die Sicherung der axialen Relativstellung von Innenbehälterabschnitt 56 und Außenbehälterabschnitt 58 in der in Fig. 3a bis 3e gezeigten ausgezogenen Stellung kann durch die Formschlussvorrichtung 38 erfolgen, welche in Formschlusseingriff mit einer entsprechenden Ausnehmung im Deckel 52, genauer in dessen Eingriffsabschnitt 54 mit kleinerem Durchmesser, ist.

Durch axiales Zurückbewegen der Betätigungsvorrichtung 12 relativ zur Greifeingriffseinrichtung 14 kann der Probenbehälter 50 wieder von der Greifvorrichtung 10 freigegeben werden, und zwar sowohl im eingezogenen Zustand des Probenbehälters 50 gemäß den Fig. 2a bis 2d als auch im ausgezogenen Zustand des Probenbehälter 50 gemäß den Figuren.

## Patentansprüche

1. Greifvorrichtung für Probenbehälter (50), insbesondere für forensische Probenbehälter (50) mit einem Innenbehälterabschnitt (56), welcher relativ zu einem den Innenbehälterabschnitt (56) umgebenden Außenbehälterabschnitt (58) längs einer Probenbehälterachse (P) verlagerbar ist, welche Greifvorrichtung (10) sich längs einer Greifvorrichtungs-Längsachse (L) erstreckt, die Greifvorrichtung (10) umfassend:
- eine Greifeingriffseinrichtung (14) mit wenigstens zwei Greifbacken (20), von welchen wenigstens eine, vorzugsweise mehrere, besonders bevorzugt alle, in radialer Richtung bezüglich der Greifvorrichtungs-Längsachse (L) zwischen einer Eingriffsstellung, in welcher ein etwaig an den Greifbacken (30) anliegender Probenbehälter (50) von der Greifeingriffseinrichtung (14) gegriffen ist, und einer Freigabestellung, in welcher der Probenbehälter (50) von der Greifeingriffseinrichtung (14) nicht gegriffen ist, verstellbar ist und
- eine Betätigungseinrichtung (12) zur Verstellung der wenigstens einen Greifbacke (20) wenigstens in ihre Eingriffsstellung,
wobei eine Einrichtung aus Greifeingriffseinrichtung (14) und Betätigungseinrichtung (12) eine Betätigungsgeometrie (22) und die jeweils andere Einrichtung eine Betätigungsgegengeometrie (24a) aufweist, wobei die Betätigungseinrichtung (12) relativ zur Greifeingriffseinrichtung (14) axial beweglich ist zwischen einer ersten axialen Relativstellung und einer zweiten axialen Relativstellung, wobei jeder axialen Relativstellung ein unterschiedlicher Grad an Eingriff, insbesondere Anlageeingriff, zwischen der Betätigungsgeometrie (22) und der Betätigungsgegengeometrie (24a) und, dadurch bewirkt, eine andere Stellung aus Eingriffsstellung und Freigabestellung der wenigstens einen beweglichen Greifbacke (20) zugeordnet ist, wobei
die Greifvorrichtung (10), vorzugsweise die Greifeingriffseinrichtung (14), eine Formschlussvorrichtung (38), etwa ein Prisma oder dergleichen, zum Formschlusseingriff mit einer Formschlussgegenvorrichtung, etwa einer Ausnehmung, am Probenbehälter (50), insbesondere an einem Deckel (52, 54) des Probenbehälters (50), aufweist, wobei sich die Formschlussvorrichtung (38) längs der Greifvorrichtungs-Längsachse (L) erstreckt und zur Übertragung eines Drehmoments um diese ausgebildet ist, **dadurch gekennzeichnet, dass** die Formschlussvorrichtung (38) gesondert von allen Greifbacken (20) ausgebildet ist.

2. Greifvorrichtung nach Anspruch 1,
**dadurch gekennzeichnet, dass** die Formschlussvorrichtung (38) eine Schutzhülle (40) aufweist, welche verstellbar ist zwischen einer Schutzstellung, in der sie die Formschlussvorrichtung (38) umgibt, und einer Rückzugsstellung, in welcher sie von der Formschlussvorrichtung (38) zurückgezogen ist und wenigstens eine Formschlussgeometrie derselben freigibt, wobei bevorzugt Schutzhülle (40) in ihre Schutzstellung federvorgespannt ist.

3. Greifvorrichtung nach einem der vorhergehenden Ansprüche,
**dadurch gekennzeichnet, dass** von den wenigstens zwei Greifbacken (20) wenigstens eine, vorzugsweise jede, federnd an einem Grundkörper (16) der Greifeingriffseinrichtung (14) vorgesehen sind, insbesondere durch wenigstens eine Biegefeder (18), welche eine um zur Greifvorrichtungs-Längsachse (L) orthogonale Biegeachse biegbar ist.

4. Greifvorrichtung nach Anspruch 3,
**dadurch gekennzeichnet, dass** die Greifeingriffseinrichtung (14) wenigstens eine mit wenigstens einer Greifbacke (20) versehene Biegefeder (18) umfasst, welche sich längs der Greifvorrichtungs-Längsachse (L) zwischen Greifbacke (20) und Grundkörper (16) erstreckt und um eine zur Greifvorrichtungs-Längsachse (L) orthogonale Biegeachse biegbar ist, wobei wenigstens eine Biegefeder (18), vorzugsweise mehrere Biegefedern (18), besonders bevorzugt alle Biegefedern (18), einstückig mit dem Grundkörper (16) ausgebildet ist.

5. Greifvorrichtung nach Anspruch 3 oder 4,
**dadurch gekennzeichnet, dass** die Greifeingriffseinrichtung (14) wenigstens eine mit wenigstens einer Greifbacke (20) versehene Biegefeder (18) umfasst, welche sich längs der Greifvorrichtungs-Längsachse (L) zwischen Greifbacke (20) und Grundkörper (16) erstreckt und um eine zur Greifvorrichtungs-Längsachse (L) orthogonale Biegeachse biegbar ist, wobei die wenigstens eine Biegefeder (18) längs ihrer Erstreckungsrichtung, vorzugsweise längs der Greifvorrichtungs-Längsachse (L), unterschiedliche Federhärten aufweist, vorzugsweise realisiert durch längs der Greifvorrichtungs-Längsachse (L) unterschiedliche Materialstärken der Biegefeder (18) in radialer Richtung oder/und in Umfangsrichtung um die Greifvorrichtungs-Längsachse (L).

6. Greifvorrichtung nach einem der Ansprüche 3 bis 5,
**dadurch gekennzeichnet, dass** die wenigstens eine federnd vorgesehene Greifbacke (20) in eine Ihrer Stellungen vorgespannt ist, vorzugsweise in die Freigabestellung.

7. Greifvorrichtung nach einem der Ansprüche 3 bis 6,
**dadurch gekennzeichnet, dass** die Greifeingriffseinrichtung (14) wenigstens eine mit wenigstens einer Greifbacke (20) versehene Biegefeder (18) umfasst, welche sich längs der Greifvorrichtungs-Längsachse (L) zwischen Greifbacke (20) und Grundkörper (16) erstreckt und um eine zur Greifvorrichtungs-Längsachse (L) orthogonale Biegeachse biegbar ist, wobei die Greifbacke (20) einstückig mit der sie aufweisenden Biegefeder (18) ausgebildet ist.

8. Greifvorrichtung nach einem der vorhergehenden Ansprüche,
**dadurch gekennzeichnet, dass** die Betätigungseinrichtung (12) die Greifeingriffseinrichtung (14) radial außen umgibt, vorzugsweise radial außen einhüllt, besonders bevorzugt einen sich längs der Greifvorrichtungs-Längsachse (L) erstreckenden Rohrabschnitt (24) aufweist, in welchem ein Abschnitt der Greifeingriffseinrichtung (14) aufgenommen ist.

9. Greifvorrichtung nach Anspruch 8,
**dadurch gekennzeichnet, dass** eine Einrichtung aus Greifeingriffseinrichtung (14) und Betätigungseinrichtung (12) an einer zur jeweils anderen Einrichtung zugewandten Fläche einen Vorsprung (22) als Betätigungsgeometrie (22) aufweist.

10. Greifvorrichtung nach Anspruch 9, unter Einbeziehung wenigstens eines der Ansprüche 3 bis 7,
**dadurch gekennzeichnet, dass** die Betätigungsgeometrie (22) an der Greifeingriffseinrichtung (14) vorgesehen ist, und zwar vorzugsweise an der wenigstens einen mit wenigstens einer Greifbacke (20) versehene Biegefeder (18).

11. Greifvorrichtung nach Anspruch 10,
**dadurch gekennzeichnet, dass** die Betätigungseinrichtung (12) einen sich längs der Greifvorrichtungs-Längsachse (L) erstreckenden Rohrabschnitt (24) aufweist, in welchem ein Abschnitt der Greifeingriffseinrichtung (14) aufgenommen ist, wobei ein den Greifbacken (20) zugewandter Rohrabschnittsrand (24a) oder/und eine Rohrabschnittsinnenfläche zur Betätigungsgegengeometrie (24a) beiträgt, insbesondere die Betätigungsgegengeometrie (24a) ist.

12. Greifvorrichtung nach einem der vorhergehenden Ansprüche,
**dadurch gekennzeichnet, dass** die Betätigungseinrichtung (12) axial verlagerbar, aber in Umfangsrichtung unverdrehbar an der Greifeingriffseinrichtung (14) aufgenommen ist.

13. Greifvorrichtung nach einem der vorhergehenden Ansprüche, bevorzugt mit dem im Oberbegriff von Anspruch 1 genannten Probenbehälter,
**dadurch gekennzeichnet, dass** die Greifvorrichtung (10), vorzugsweise die Betätigungseinrichtung (12), eine Betätigungsanordnung (70), vorzugsweise sich in axialer Richtung erstreckende Betätigungsfortsätze (70), aufweist, welche zum Eingriff an dem Probenbehälter (50) ausgebildet sind.

14. Greifvorrichtung (10) nach einem der vorhergehenden Ansprüche, mit einem Probenbehälter (50), insbesondere einem forensischen Probenbehälter (50) mit einem Innenbehälterabschnitt (56), welcher relativ zu einem den Innenbehälterabschnitt (56) umgebenden Außenbehälterabschnitt (58) längs einer Probenbehälterachse (P) verlagerbar ist, wobei die Behälterabschnitte (56, 58) in wenigstens einer Relativstellung sicherbar, insbesondere überwindbar verrastbar oder/und formschlüssig verriegelbar sind.

## Claims

1. Gripping device for sample containers (50), in particular for forensic sample containers (50) with an inner container portion (56) which, in relation to an outer container portion (58) surrounding the inner container portion (56) can be displaced along a sample container axis (P), wherein the gripping device (10) extends along a gripping device longitudinal axis (L), the gripping device (10) comprising:
- a gripper engagement means (14) with at least two gripper jaws (20), wherein at least one out of them, preferably several out of them and with particular preference all of them are, in a radial direction in relation to the gripping device longitudinal axis (L), adjustable between an engagement position where any sample container (50) abutting on the gripper jaws (30) is being gripped by the gripper engagement means (14) and a release position where the sample container (50) is not being gripped by the gripper engagement means (14), and
- an actuation means (12) for adjusting the at least one gripper jaw (20) at least in its engagement position,
wherein one means out of the gripper engagement means (14), and the actuation means (12) has an actuation geometry (22) and the other means has an actuation counter geometry (24a), wherein the actuation means (12) can be moved axially in relation to the gripper engagement means (14) between a first axial relative position and a second axial relative position, wherein to each axial relative position is associated a different degree of engagement, in particular abutment engagement, between the actuation geometry (22) and the actuation counter geometry (24a) and, effected thereby, another position of engagement position and release position of the at least one mobile gripper jaw (20), wherein
the gripper device (10), preferably the gripper engagement means (14), comprises a form fitting device (38), for example a prism or the like, for form fitting engagement with a form fitting counter device, for example a recess at the sample container (50), in particular at a lid (52, 54) of the sample container (50), the form fitting device (38) extending along the gripper device longitudinal axis (L) and being adapted for transmitting a torque,
**characterized by** the form fitting device (38) being formed separately from all gripper jaws (20).

2. Gripping device according to claim 1,
**characterized in that** the form fitting device (38) comprises a protective cover (40) which is adjustable between a protective position where it surrounds the form fitting device (38) and a withdrawal position where it is withdrawn from the form fitting device (38) and releases at least a form fitting geometry of the latter, wherein the protective cover (40) is biased by a spring into its protective position.

3. Gripping device according to one of the preceding claims,
**characterized in that** at least one, preferably both of the at least two gripper jaws (20) are provided resiliently at a basic body (16) of the gripper engagement means (14), in particular by at least one bending spring (18) which can be bent around a bending axis orthogonal to the gripping device longitudinal axis (L).

4. Gripping device according to claim 3,
**characterized in that** the gripper engagement means (14) comprises at least one bending spring (18) provided with at least one gripper jaw (20), extending along the gripping device longitudinal axis (L) between the gripper jaw (20) and the basic body (16) and bendable around a bending axis orthogonal to the gripping device longitudinal axis (L), wherein at least one bending spring (18), preferably several bending springs (18), with particular preference all bending springs (18) are formed in one piece with the basic body (16).

5. Gripping device according to claim 3 or 4,
**characterized in that** the gripper engagement means (14) comprises at least one bending spring (18) provided with at least one gripper jaw (20), extending along the gripping device longitudinal axis (L) between the gripper jaw (20) and the basic body (16) and bendable around a bending axis orthogonal to the gripping device longitudinal axis (L), wherein at least one bending spring (18) has different spring stiffnesses along its direction of extension, preferably along the gripping device longitudinal axis (L), preferably realised by different material thicknesses of the bending spring (18) along the gripping device longitudinal axis (L) in a radial direction or/and in a circumferential direction around the gripping device longitudinal axis (L).

6. Gripping device according to one of claims 3 to 5,
**characterized in that** the at least one resiliently provided gripper jaw (20) is biased into one of its positions, preferably into the release position.

7. Gripping device according to one of claims 3 to 6,
**characterized in that** the gripper engagement means (14) comprises at least one bending spring (18) provided with at least one gripper jaw (20), extending along the gripping device longitudinal axis (L) between the gripper jaw (20) and the basic body (16) and bendable around a bending axis orthogonal to the gripping device longitudinal axis (L), wherein the gripper jaw (20) is formed in one piece with the bending spring (18) comprising the latter.

8. Gripping device according to one of the preceding claims,
**characterized in that** the actuation means (12) surrounds the gripper engagement means (14) radially at the outside, preferably enwraps it radially at the outside, and with particular preference comprises a tube portion (24) extending along the gripping device longitudinal axis (L) in which a portion of the gripper engagement means (14) is incorporated.

9. Gripping device according to claim 8,
**characterized in that** a configuration comprising the gripper engagement means (14) and the actuation means (12) comprises a projection (22) as actuation geometry (22) at a surface facing the respective other means.

10. Gripping device according to claim 9 together with at least one of claims 3 to 7,
**characterized in that** the actuation geometry (22) is provided at the gripper engagement means (14), preferably at the at least one bending spring (18) provided with at least one gripper jaw (20).

11. Gripping device according to claim 10,
**characterized in that** the actuation means (12) comprises a tube portion (24) extending along the gripping device longitudinal axis (L) in which a portion of the gripper engagement means (14) is incorporated, a border of the tube portion (24a) facing the gripper jaws (20) or/and a tube portion inner surface contributing to the actuation counter geometry (24a) and in particular being the actuation counter geometry (24a).

12. Gripping device according to one of the preceding claims,
**characterized in that** the actuation means (12) is received at the gripper engagement means (14) in an axially mobile way but fixed against rotation in the circumferential direction.

13. Gripping device according to one of the preceding claims, preferably with the sample container described in the preamble of claim 1,
**characterized in that** the gripping device (10), preferably the actuation means (12) comprises an actuation arrangement (70), preferably actuation extensions (70) extending in an axial direction, formed for engagement at the sample container (50).

14. Gripping device (10) according to one of the preceding claims, with a sample container, preferably with a forensic sample container (50) with an inner container portion (56) which in relation to an outer container portion surrounding the inner container portion can be moved along a sample container axis (P), wherein the container portions (56, 58) can be locked in at least one relative position in a securable, in particular lockable in a surmountable or/and form fit way.

## Revendications

1. Dispositif de préhension pour des récipients d'échantillon (50), en particulier pour des récipients d'échantillons forensiques (50) comprenant une portion de récipient intérieure (56) qui, par rapport à une portion de récipient extérieure (58) entourant la portion de récipient intérieure (56), est déplaçable le long d'un axe du récipient d'échantillon (P) le dispositif de préhension (10) s'étendant le long d'un axe longitudinal de dispositif de préhension (L), le dispositif de préhension (10) comprenant:
- un moyen d'engagement de préhension (14) avec au moins deux mâchoires de prise (20) dont au moins une, de préférence plusieurs, de façon particulièrement préférée toutes, sont réglables dans une direction radiale en relation à l'axe longitudinal de dispositif de préhension (L) entre une position d'engagement où un récipient d'échantillon (50) adjacent aux mâchoires de prise (30) est saisi par le moyen d'engagement de préhension (14) et une position de dégagement où le récipient d'échantillon (50) n'est pas saisi par le moyen d'engagement de préhension (14), et
- un moyen d'actionnement (12) pour amener ladite au moins une mâchoire de prise (20) dans sa position d'engagement,
où un moyen choisi du moyen d'engagement de préhension (14) et du moyen d'actionnement (12) présente une géométrie d'actionnement (22) et l'autre moyen a une géométrie d'actionnement antagoniste (24a), le moyen d'actionnement (12) étant axialement mobile par rapport au moyen d'engagement de préhension (14) entre une première position relative axiale et une deuxième position relative axiale, des degrés différents d'engagement, en particulier d'engagement en appui entre la géométrie d'actionnement (22) et la géométrie d'actionnement antagoniste (24a) et pour cette raison une autre configuration de position d'engagement et de position de dégagement de ladite au moins une mâchoire de prise (20), étant associés à chaque position relative, où
le dispositif de préhension (10), de préférence le moyen d'engagement de préhension (14), comprend un dispositif de complémentarité de forme (38), par exemple un prisme ou autre, pour un engagement en complémentarité de forme avec un dispositif de complémentarité de forme antagoniste, par exemple une cavité dans le récipient d'échantillon (50), en particulier dans un couvercle (52, 54) du récipient d'échantillon (50), le dispositif de complémentarité de forme (38) s'étendant le long de l'axe longitudinal de dispositif de préhension (L) et étant formé autour de ce dernier pour transmettre un couple,
**caractérisé par** le dispositif de complémentarité de forme (38) étant formé séparément de toutes les mâchoires de prise (20).

2. Dispositif de préhension selon la revendication 1,
**caractérisé par le** dispositif de complémentarité de forme (38) comprenant une enveloppe protectrice (40) qui est réglable entre une position de protection où elle entoure le dispositif de complémentarité de forme (38) et une position de retrait où elle est retirée du dispositif de complémentarité de forme (38) et libère au moins une géométrie de complémentarité de forme de ce dernier, l'enveloppe protectrice (40) étant de préférence sollicitée par ressort dans sa position de protection.

3. Dispositif de préhension selon une des revendications précédentes,
**caractérisé en ce que** au moins une des deux mâchoires de prise (20), de préférence chacune, est prévue de manière élastique à un corps de base (16) du moyen d'engagement de préhension (14), en particulier par au moins un ressort de flexion (18) qui peut être cintré autour d'un axe de flexion orthogonal à l'axe longitudinal de dispositif de préhension (L).

4. Dispositif de préhension selon la revendication 3,
**caractérisé par le** moyen d'engagement de préhension (14) comprenant au moins un ressort de flexion (18) prévu avec au moins une mâchoire de prise (20), qui s'étend le long de l'axe longitudinal de dispositif de préhension (L) entre la mâchoire de prise (20) et le corps de base (16) et qui peut être fléchie autour d'un axe de flexion orthogonal à l'axe longitudinal de dispositif de préhension (L), au moins un ressort de flexion (18), de préférence plusieurs ressorts de flexion (18), et particulièrement tous les ressorts de flexion (18) étant formés en une pièce avec le corps de base (16).

5. Dispositif de préhension selon les revendications 3 ou 4,
**caractérisé par le** moyen d'engagement de préhension (14) comprenant au moins un ressort de flexion (18) prévu avec au moins une mâchoire de prise (20), qui s'étend le long de l'axe longitudinal de dispositif de préhension (L) entre la mâchoire de prise (20) et le corps de base (16) et peut être fléchi autour d'un axe de flexion orthogonal à l'axe longitudinal de dispositif de préhension (L), ledit au moins un ressort de flexion (18) ayant le long de sa direction d'extension, de préférence le long de l'axe longitudinal de dispositif de préhension (L), des duretés de ressort différentes, réalisées de préférence par des épaisseurs de matériel différentes du ressort de flexion (18) le long de l'axe longitudinal de dispositif de préhension (L) dans une direction radiale ou/et dans une direction circonférentielle autour de l'axe longitudinal de dispositif de préhension (L).

6. Dispositif de préhension selon une des revendications 3 à 5,
**caractérisé en ce que** ladite au moins une mâchoire de prise (20) élastique est précontrainte dans une de ses positions, de préférence dans la position de dégagement.

7. Dispositif de préhension selon une des revendications 3 à 6,
**caractérisé en ce que** ledit moyen d'engagement de préhension (14) comprend au moins un ressort de flexion (18) prévu avec au moins une mâchoire de prise (20), qui s'étend le long de l'axe longitudinal de dispositif de préhension (L) entre la mâchoire de prise (20) et le corps de base (16) et peut être fléchi autour d'un axe de flexion orthogonal à l'axe longitudinal de dispositif de préhension (L), la mâchoire de prise (20) étant formée en une pièce avec le ressort de flexion (18) qui la présente.

8. Dispositif de préhension selon une des revendications précédentes,
**caractérisé en ce que** le moyen d'actionnement (12) entoure le moyen d'engagement de préhension (14) radialement à l'extérieure, de préférence l'enveloppe radialement à l'extérieure et comprend de manière particulièrement préférée une portion de tube (24) s'étendant le long de l'axe longitudinal de dispositif de préhension (L), dans laquelle une portion du moyen d'engagement de préhension (14) est reçue.

9. Dispositif de préhension selon la revendication 8,
**caractérisé en ce qu'**un moyen choisi du moyen d'engagement de préhension (14) et du moyen d'actionnement (12) comprend une projection (22) à la surface orientée vers l'autre moyen servant de géométrie d'actionnement (22).

10. Dispositif de préhension selon la revendication 9 avec au moins une des revendications 3 à 7,
**caractérisé par** la géométrie d'actionnement (22) étant prévue au moyen d'engagement de préhension (14), de préférence audit au moins un ressort de flexion (18) prévu d'au moins une mâchoire de prise (20).

11. Dispositif de préhension selon la revendication 10,
**caractérisé en ce que** le moyen d'actionnement (12) comprend une portion de tube (24) s'étendant le long de l'axe longitudinal de dispositif de préhension (L), dans laquelle une portion du moyen d'engagement de préhension (14) est reçue, un bord de portion de tube (24a) orienté vers les mâchoires de prise (20) ou/et une surface intérieure de la portion de tube contribuent à la géométrie d'actionnement antagoniste (24a), et constituent de préférence eux-mêmes la géométrie d'actionnement antagoniste (24a).

12. Dispositif de préhension selon une des revendications précédentes,
**caractérisé en ce que** le moyen d'actionnement (12) peut être déplacé axialement, mais est supporté au moyen d'engagement de préhension (14) d'une manière ne permettant pas une torsion dans la direction circonférentielle.

13. Dispositif de préhension selon une des revendications précédentes, de préférence avec le récipient d'échantillon décrit dans le préambule de la revendication 1,
**caractérisé par** le dispositif de préhension (10), de préférence le moyen d'actionnement (12) comprenant un arrangement d'actionnement (70), de préférence des extensions d'actionnement (70) s'étendant dans une direction axiale, formées pour un engagement au récipient d'échantillon (50).

14. Dispositif de préhension (10) selon une des revendications précédentes, avec un récipient d'échantillon (50), en particulier avec un récipient d'échantillon forensique (50) avec une portion de récipient intérieure (56) qui en relation à une portion de récipient extérieure (58) entourant la portion de récipient intérieure (56) peut être déplacée le long d'un axe de récipient d'échantillon (P), les portions de récipient (56, 58) pouvant être sécurisées dans au moins une position relative, en particulier être bloquées de manière surmontable ou/et arrêtées par complémentarité de forme.
